# EUROPÄISCHE PATENTSCHRIFT

(11) **EP 1 393 282 B1**
(45) Veröffentlichungstag und Bekanntmachung des Hinweises auf die Patenterteilung: **21.12.2005**
(21) Anmeldenummer: 02753042.7
(22) Anmeldetag: 04.05.2002
(51) Int. Cl.: G08G 1/16

(54) **KOLLISIONSSCHUTZ FÜR FAHRZEUGE**
COLLISION PREVENTION SYSTEM FOR VEHICLES
PROTECTION ANTICOLLISION POUR VEHICULES

(30) Priorität: 08.05.2001 DE 10128792
(43) Veröffentlichungstag der Anmeldung: 03.03.2004
(73) Patentinhaber: DaimlerChrysler AG, 70567 Stuttgart (DE)
(72) Erfinder: DOBLER, Günter, 73776 Altbach (DE); ENIGK, Holger, 15834 Rangsdorf (DE); MARWITZ, Hartmut, 73729 Esslingen (DE); ROTHE, Siegfried, 73770 Denkendorf (DE)
(86) Internationale Anmeldenummer: PCT/EP2002/004918
(87) Internationale Veröffentlichungsnummer: WO 2003/001471

(56) Entgegenhaltungen:
- EP-A- 0 626 655
- US-A- 5 602 542

## Beschreibung

Die Erfindung liegt auf dem Gebiet der Fahrzeugtechnik. Insbesondere betrifft die Erfindung Sicherheitssysteme zur Verhinderung von Kollisionen.

Solche Systeme sind speziell bedeutsam bei Fahrzeugen, die aufgrund ihrer Größe, ihres Gewichts und des z.T. komplexen Aufbaus (z.B. mehrere Achsen, Anhänger, Container usw.) in kritischen Situationen weniger leicht zu steuern sind.

Dies sind beispielsweise Lastkraftwagen (Solofahrzeuge, Sattel- und Anhängerfahrzeuge), Busse, Gespanne und andere Fahrzeuge (z.B. Wohnwagen), bei denen das Problem entsteht, dass vorhandene Überhänge in verschiedenen Bereichen des Fahrzeugs (Heck, Front, Flanken Ecken und Aufbauten) beim Abbiegen und Rangieren ausschwenken. Je nach Fahrzeugtyp sind zudem meist mehrere Bereiche des Fahrzeugs aus der Position des Fahrers schlecht einsehbar, so dass der Fahrer häufig aufgrund von 'toten Winkeln' keine Möglichkeit hat, ein Ausschwenken zu kontrollieren - z.B. durch einen Blick in den Spiegel - und beispielsweise während eines Rangiermanövers eine zu enge Annäherung solcher Fahrzeugbereiche an Hindernisse zu bemerken und entsprechend zu reagieren. Somit besteht in engen Fahrsituationen die Gefahr, mit Hindernissen und anderen Verkehrsteilnehmern zu kollidieren, wodurch großer Personen- und Sachschaden entstehen kann.

Im folgenden sind typische Situationen dargestellt, in denen die geschilderten Probleme auftreten:

### a) Kollisionsgefahren im Frontbereich

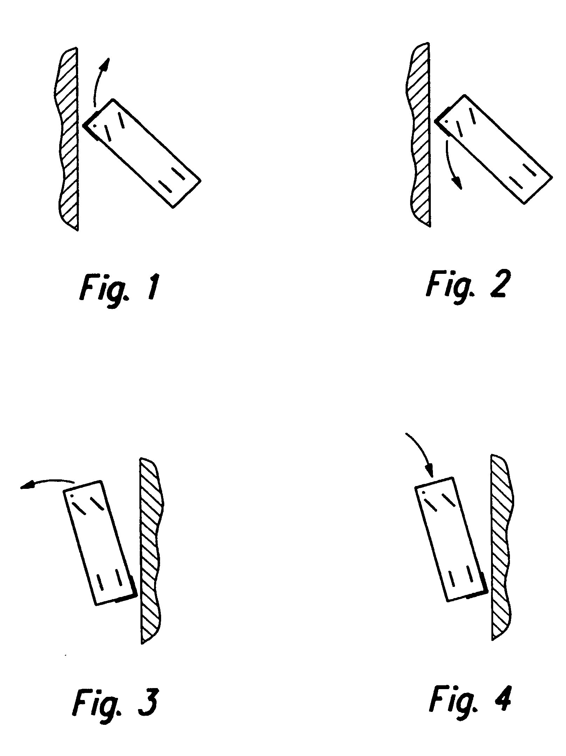

Besonders Fahrzeuge mit einem großen vorderen Überhang (Abstand zwischen vorderer Achse und der Fahrzeugfront) schwenken beim Abbiegen oder Rangieren sehr weit aus und müssen auch in sehr engen Straßen stark ausholen. Dabei bewegt sich die Fahrzeugfront über einen entsprechend großen Radius und insbesondere Seitenbereiche der Front können schnell gegen Hindernisse prallen (Figur 1). Auch beim rückwärts Einparken oder Rangieren bewegt sich die Front des Fahrzeugs kreisbogenförmig (eingeschlagene Vorderräder), so daß ebenfalls die Gefahr besteht, dass Seitenbereiche der Front kollidieren (Figur 2). Diese Gefahr ist noch erhöht, da beim Zurücksetzen naturgemäß die Hauptaufmerksamkeit des Fahrers entsprechend der Fahrtrichtung auf den hinteren Fahrzeugbereich gerichtet ist.

### b) Kollisionsgefahren im Heckbereich

In entsprechender Weise besteht bei Fahrzeugen mit einem großen Überhang des Hecks (Abstand zwischen hinterer Achse und Heck) Kollisionsgefahr speziell der Seitenbereiche des Hecks sowohl bei Vorwärts- als auch bei Rückwärtsmanövern (Fig. 3 und 4). Insbesondere bei Fahrzeuge mit Hängern, Aufliegern oder Aufbauten (z.B. Autodrehkran) sind diese Kollisionsgefahren besonders ausgeprägt.

### c) Kollisionsgefahren bei mitgeführten Anhängern, Aufliegern usw.

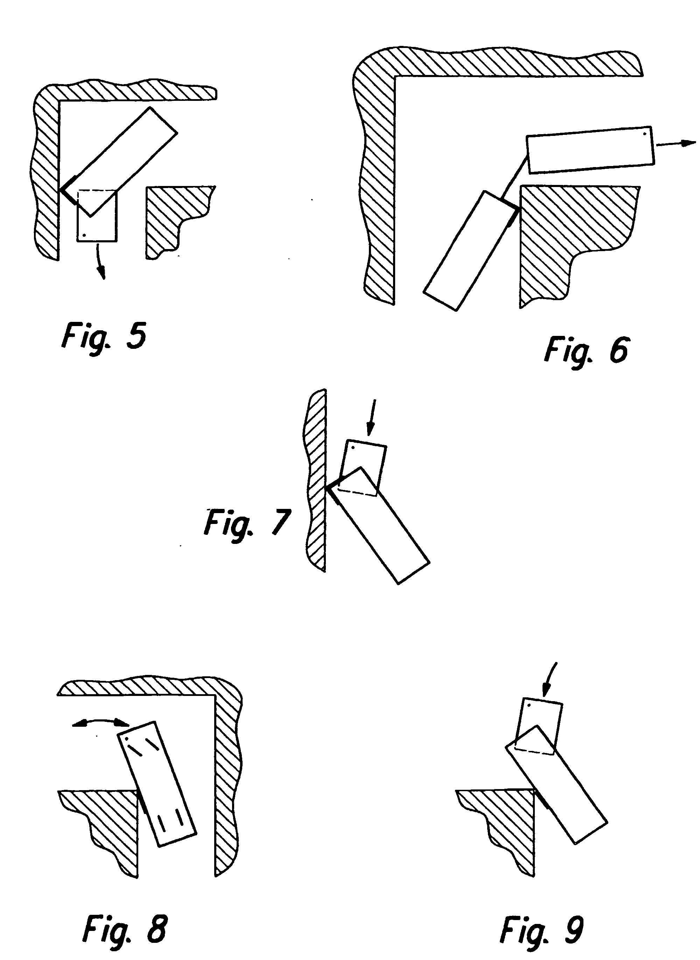

Spezielle Probleme entstehen bei Fahrzeugen mit Anhängern, Aufliegern oder Aufbauten. Bei solchen Fahrzeugen schwenkt der Bug des mitgeführten Fahrzeugteils beim vorwärts und rückwärts Abbiegen oder Rangieren bogenförmig aus, so dass in kritischen Fahrsituationen Kollisionsgefahr besteht (Fig. 5, 6, 7).

### d) Kollisionsgefahr der Fahrzeug-Seitenbereiche

Auch die Seitenbereiche eines (längeren) Fahrzeugs können bei engem Rangierraum mit Hindernissen kollidieren (Fig. 8 und 9) .
Die geschilderten Situationen zeigen, dass die Probleme einer möglichst umfassenden Kollisionsvermeidung relativ komplex sind. Bekannt sind Systeme, bei denen Abstandsmeldungen erfolgen. Dabei werden die kritischen Fahrzeugbereiche durch Einrichtungen überwacht, die Annäherungen an Hindernisse erfassen (z.B. Ultraschallfühler, Videokameras). Bei Unterschreiten einer vorgegebenen Distanz wird dann der Fahrer z.B. durch optische oder akustische Signale gewarnt. Diese Systeme können jedoch nur in einfachen Fahrsituationen Hindernisse und Abstände rechtzeitig erkennen. Aufgrund der Eigenbewegung des Fahrzeugs können daher Warnungen zu spät (oder falsch) erfolgen, so dass für den Fahrer durch die u.U. hohe zeitliche Dynamik der Fahrsituation kaum noch die Möglichkeit besteht, rechtzeitig angemessen zu reagieren.

In der WO 03/001471 A2 wird ein System zur Vermeidung von Kollisionen eines Fahrzeugs mit Hindernissen beschrieben. Dabei werden von Sensoren am Fahrzeug Bereiche der räumlichen Umgebung des Fahrzeugs erfasst und deren Signale von einer Datenverarbeitungseinrichtung zur Berechnung des vorhandenen hindernisfreien Fahrraums ausgewertet. Andere Sensoren erfassen zusätzlich die Lage und Position aller beweglichen Fahrzeugteile , sowie dynamische Parameter der aktuellen Fahrsituation. Aus diesen Daten wird über die Datenverarbeitungseinrichtung der bei Fortsetzung der fahrt in den nächsten Zeitabschnitten benötigte Fahrraum vorausberechnet und mit den erfassten tatsächlichen vorhandenen hindernisfreien Fahrraum verglichen. Dieser Vergleich liefert eine frühzeitige Vorhersage einer möglichen Kollision. In kritischen Situationen können zur Unterstützung des Fahrers über die Datenverarbeitungseinrichtung auch direkte Eingriffe in die Fahrzeugsteuerung erfolgen.

Das Patent US 5602542 A1 zeigt ein System zur Unterstützung von Fahrzeugführern bei Parkvorgängen. Mittels Ultraschallsensoren am Fahrzeugheck wird ein Entfernungsprofil bezüglich der Fahrzeugkontur und den dieser nächstliegenden Objekten erzeugt. Die Kontur des Hecks des Fahrzeuges ist dabei in einem Speicher abgelegt. In einem gleichermaßen organisierten Speicher wird das Entfernungsprofil abgelegt. Auf diese Weise können durch direkten Vergleich der Speicherinhalte in einem Mikroprozessor kontinuierlich während des Einparkvorgangs die Relativentfernungen zwischen Fahrzeugheck und den Objekten in dessen Umfeld bestimmt werden.

Die Erfindung geht von diesem Stand der Technik aus. Ihr liegt die Aufgabe zugrunde, ein verbessertes System zur Vermeidung von Kollisionen von Fahrzeugen mit Hindernissen zu entwickeln.

Diese Aufgabe wird gelöst durch das Verfahren nach Anspruch 1 und der Vorrichtung zur Durchführung des Verfahrens mit den Merkmalen des Anspruchs 9. Weitere Einzelheiten und vorteilhafte Ausgestaltungen ergeben sich aus den Unteransprüchen.

Die vorliegende Erfindung wird im folgenden näher beschrieben, dabei zeigt
- Figur 10: schematische Darstellungen des benötigten Fahrraums am Beispiel einer engen Kurve in zeitlicher Folge (t₀, t₁, tₙ) .
- Figur 11: Veranschaulichung des vorhandenen Fahrraums derselben Situation nach Fig. 10.

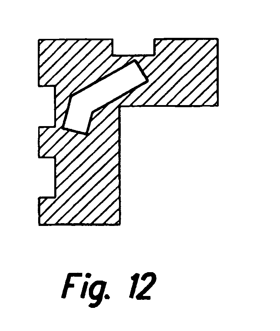

- Figur 12: zeigt einen Vergleich von benötigten und vorhandenen Fahrraum entsprechend der Fahrsituation zum Zeitpunkt t₁ (nach Fig. 10).

Das erfindungsgemäße System zur Vermeidung von Kollisionen detektiert simultan verschiedene Situationsparameter, so dass die Gefahr einer Kollision zeitlich frühzeitig erfaßt werden kann. Aufgrund dessen werden dann kollisionsvermeidende Maßnahmen ergriffen. Die Funktion des Systems läßt sich dabei in einzelne Bereiche unterteilen:

### a) Bestimmung des benötigten Fahrraums

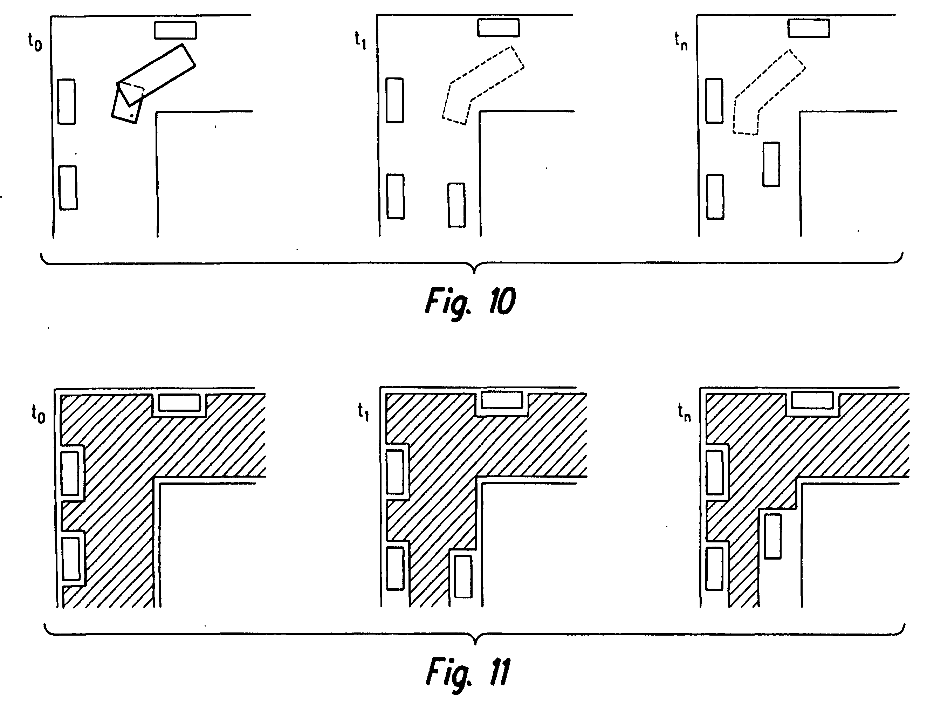

Eine wesentliche Komponente des Systems besteht in der Bestimmung des - je nach Manöver unterschiedlichen - benötigten Fahrraums. Der benötigte Fahrraum ist das Volumen im Raum, das zeitlich nacheinander während der Fahrt vom Fahrzeug 'durchstreift' wird. Hierzu gehört insbesondere auch der Raum, der beim Abbiegen und Rangieren durch das Ausschwenken von Überhängen benötigt wird. Figur 10 zeigt als Beispiel schematisch die räumlichen Positionen eines LKW zu den Zeitpunkten t₀, t₁, tₙ während einer engen Kurvenfahrt. Durch schrittweise Überlagerung der zeitlichen Abfolge der Positionen läßt sich so der insgesamt für das Fahrmanöver benötigte Fahrraum darstellen.

Für eine Kollisionsvermeidung ermittelt das erfindungsgemäße System aus verschiedenen Daten Abschnitte des benötigten Fahrraums zeitlich im voraus durch eine Berechnung in einer Datenverarbeitungseinrichtung (Computer, Mikroprozessor).

Diese Daten sind zum einen die Abmaße des Fahrzeugs inklusive der Abmaße weiterer Fahrzeugteile wie Anhänger, Auflieger, Aufbauten usw. Zu diesen Größenangaben kommen konstruktive Details (Positionen von Achsen, Position des Auflagepunkts bzw. der Anhängerkupplung usw.), da diese das Ausscheren von Fahrzeugteilen mitbestimmen.

Neben diesen (i.a. konstanten) Werten sind Angaben über die momentane Stellung beweglicher Fahrzeugteile erforderlich (Lenkwinkel, Winkel zwischen Anhänger und Zugmaschine usw.), die sich während der Fahrt ändern und daher laufend aktualisiert werden müssen. Für die Erfassung dieser Daten müssen entsprechende Sensoren (Meßfühler, Wegaufnehmer usw.) am Fahrzeug vorhanden sein, deren Signale zur Datenverarbeitungseinrichtung weitergeleitet werden.

Wesentlich für eine Kollisionsvermeidung ist die möglichst genaue Vorausberechnung des (bei weiterer Fahrt) zukünftig benötigten Fahrraums. Hierzu müssen neben den genannten Daten zusätzlich auch verschiedene dynamische Werte der Fahrsituation (Geschwindigkeit, Gangwahl, Motordrehzahl, Bremswerte usw.) erfaßt und in die Berechnungen einbezogen werden. Für die kontinuierliche Erfassung dieser dynamischen Werte sind entsprechende Sensoren erforderlich, deren Daten zur Datenverarbeitungseinrichtung übermittelt werden.

In Abhängigkeit von all diesen Daten wird dann der benötigte Fahrraum errechnet, der vom Fahrzeug (inkl. Fahrzeuteilen) bei Fortführung der Fahrt eingenommen werden wird.

### b) Bestimmung des vorhandenen Fahrraums

Der vorhandene Fahrraum ist der Raumbereich ohne Hindernisse, der für die sichere und kollisionsfreie Fahrt des Fahrzeugs zur Verfügung steht. Dieser Fahrraum ist in der Regel durch den Straßenverlauf bestimmt und wird zusätzlich durch unbewegliche Hindernisse (Straßenbegrenzungen, Bäume, Häuser, parkende Fahrzeuge usw.) eingeschränkt, andererseits durch sich bewegende Hindernisse und Verkehrsteilnehmer (Fahrzeuge, Fußgänger usw.) verändert. Je nach Verkehrsgeschehen ändert sich dabei der vorhandene Fahrraum mehr oder weniger dynamisch. Figur 11 zeigt diese Situation eines sich zeitlich (t₀, t₁, tₙ) ändernden vorhandenen Fahrraums.

Für die Vermeidung von Kollisionen müssen die Abmessungen des vorhandenen Fahrraum ermittelt und in Berechnungen der Datenverarbeitungseinrichtung einbezogen werden. Dazu ist zunächst die räumliche Umgebung des Fahrzeugs zu erfassen. Hierfür können verschiedene Mittel eingesetzt werden, z.B. GPS (Global-Positioning-System), digitale Karten (im Datenbestand der Datenverarbeitungseinrichtung gespeichert oder per drahtloser Verbindung zu stationären Computern abrufbar), optische und andere Strahlensensoren (sichtbares Licht, Infrarot, Radar), Distanz- u. Bewegungsmelder (z.B. Ultraschall, Laser usw.). In Verbindung mit Videokameras können auch moderne Techniken der Bilderkennung (Computerauswertung von Videosignalen zur Erkennung von Objekten) eingesetzt werden, um Hindernisse zu identifizieren. Für eine komplexe, möglichst präzise Umgebungserfassung sind dabei vorzugsweise mehrere der aufgeführten Mittel kombiniert. Die von diesen Einrichtungen gelieferten Daten werden zur Datenverarbeitungseinrichtung übertragen und dort für die Berechnung der Abmessungen des vorhandenen Fahrraums ausgewertet. So kann ein virtuelles Abbild, z.B. als Gittermodell des vorhandenen Fahrraums erstellt werden.

Da sich zum einen die Lage des vorhandenen Fahrraums bei jeder Eigenbewegung des Fahrzeugs laufend ändert, zum anderen auch die Abmessungen sich durch bewegliche Hindernisse ändern können, ist diese Berechnung des vorhandenen Fahrraums ständig zu aktualisieren. Je nach aktueller Geschwindigkeit des eigenen Fahrzeugs, aber auch anderer sich bewegender Hindernisse (z.B. entgegenkommender PKW), kann es erforderlich sein, dass das zwischen zwei aufeinanderfolgenden Erfassungen des sich ändernden vorhandenen Fahrraums liegende Zeitintervall t₁-t₀ im Bereich von Bruchteilen einer Sekunde liegt.

### c) Kollisionsprädiktion durch Vergleich von benötigtem und vorhandenem Fahrraum

Für die frühzeitige Erkennung einer sich anbahnenden Kollision erfolgt ein Vergleich zwischen vorausberechnetem benötigten Fahrraum und tatsächlich aktuell erfaßtem vorhandenen Fahrraum. Dieser Vergleich wird mittels entsprechender Berechnungen von der Datenverarbeitungseinrichtung durchgeführt. Kommt es dabei zu einer Überschneidung des vorausberechneten benötigten Fahrraums mit den Grenzen des vorhandenen Fahrraums, so besteht eine Kollisionsgefahr, d.h. immer dann, wenn das Fahrzeug (inkl. Fahrzeugteile wie Anhänger usw.) bei unveränderter Fortführung der Fahrt im Begriff ist, den vorhandenen Fahrraum zu verlassen.

Da sich die Fahrsituation (Position des Fahrzeugs, bewegliche Hindernisse, usw.) laufend ändert, müssen diese Vergleichsberechnungen über die Zeit (t₀, t₁,...,tₙ) ständig mit aktualisierten Daten bzgl. vorhandenem bzw. benötigtem Fahrraum wiederholt werden. Idealerweise findet während der gesamten Fahrt eine kontinuierliche Kollisionsüberwachung statt.

Da für die Erfassung sowohl des benötigten, als auch des vorhandenen Fahrraums über eine Anzahl verschiedener Sensoren zahlreiche Meßprozesse durchgeführt werden, bei denen auch Ungenauigkeiten auftreten können, ist es erforderlich, die aus diesen Daten berechnete Kollisionsprognose mit Sicherheitsbereichen bzgl. der räumlichen Verhältnisse und ihrer zeitlichen Veränderung durchzuführen. So kann beispielsweise der vorausberechnete benötigte Fahrraum um Sicherheitsdistanzen vergrößert werden und/oder der erfaßte vorhandene Fahrraum entsprechend verkleinert werden. Entsprechend der dynamischen Entwicklung der Fahrsituation (Fortbewegung des eigenen Fahrzeugs, Positionsveränderungen anderer Verkehrsteilnehmer) können diese Sicherheitsdistanzen ebenfalls dynamisch angepaßt werden.

Alle erforderlichen Berechnungen können im Fahrzeug selbst durch eine mitgeführte und entsprechend leistungsfähige Datenverarbeitungseinrichtung erfolgen. Alternativ können die Signale der am Fahrzeug befindlichen Detektoren und Sensoren zur Berechnung über eine drahtlose Verbindung an eine stationäre Datenverarbeitungsanlage übersendet und nach dortiger Auswertung die Ergebnisse an das Fahrzeug zurück übertragen werden, wo dann die entsprechende Reaktion ausgelöst wird. Auch ein kombiniertes System ist möglich, bei dem eine erste Datenverarbeitungsanlage im Fahrzeug in drahtloser Verbindung zu einer stationären Datenverarbeitungsanlage steht.

### d) Kollisionsvermeidung

Besteht eine Kollisionsgefahr, so führt das System nach einem stufenweisen Maßnahmenkatalog eine Reihe von Maßnahmen durch. Besteht ausreichend Zeit, durch übliche Fahrmanöver die Kollision zu verhindern, so sind zunächst Warnsignale sinnvoll, die den Fahrer zum Eingreifen veranlassen. Diese Warnsignale können akustisch erfolgen (auffällige Töne/Klänge; aber auch durch Sprachausgaben, wobei auch konkrete Hinweise z.B. auf die betroffene Fahrzeugstelle oder auch Handlungsempfehlungen möglich sind), optisch (z.B. durch Lichtsignale), visuell (beispielsweise durch grafische Darstellungen des Fahrzeugs und des Hindernisses auf entsprechenden Displays) oder auch haptisch (z.B. Vibration, Rütteln des Lenkrads). Sollte die verbleibende Zeit für eine angemessene Reaktion durch den Fahrer nicht ausreichen, so bewirkt das System einen direkten Eingriff in die Fahrzeugführung, z.B. eine Notbremsung oder ein Gegenlenken des Fahrzeugs um wieder in den vorhandenen Fahrraum zu gelangen. Weiterhin kann auch der benötigte Fahrraum verkleinert werden, indem die Konturen des Fahrzeugs automatisch verkleinert werden (z.B. Einklappen der Seitenspiegel, Einfahren von Antennen, Versenken von Windabweiseren usw.; Veränderung der Höhenregulierung z.B. um die Fahrzeughöhe vor einer Unterführung/Brücke zu reduzieren oder um die Bodenfreiheit zu erhöhen; Verstellen der Aufbauten und Überhänge, z.B. Einfahren der Heckklappe, Drehen von Kranaufbauten in Kurven, Verstellen der Deichsellänge).

Das erfindungsgemäße System bietet eine hohe Sicherheit der Kollisionsvermeidung, da nicht nur die aktuellen Abstandswerte zwischen Fahrzeugteilen und Hindernissen berücksichtigt werden, sondern auch dynamische Veränderungen erfaßt und für eine Vorausberechnung genutzt werden, so daß eine Kollisionswarnung erfolgen kann, bevor kritische Distanzen überhaupt erreicht werden. Durch diese frühzeitige Warnung ist i.a. eine Kollisionsvermeidung durch normale Fahrmanöver möglich, d.h. Eingriffe des Fahrers können ohne überhastete Handlungen erfolgen, bei denen immer die Gefahr einer falschen Reaktion gegeben ist (Wegfall der sog. 'Schrecksekunde') .

Neben diesem wichtigen Aspekt eines relativ frühen Warnhinweises kann das erfindungsgemäße System zusätzlich dem Fahrer auch wertvolle Informationen zur Verfügung stellen (z.B. voraussichtliche Kollisionsstelle, aktuelle Distanz zum Hindernis, verbleibende Zeit usw.), die die Reaktionszeit weiter wesentlich verringern, da der Fahrer unmittelbar ganz gezielt eingreifen kann. Diese Unterstützung ist insbesondere vorteilhaft in unübersichtlichen Situationen (ungünstige Lichtverhältnisse z.B. durch Nebel, schlecht einsehbarer Fahrbereich, hohes Verkehrsaufkommen usw.), in denen das Gefahrpotenzial einer Kollision entsprechend hoch ist.
Da nicht nur eigene Positionsveränderungen berücksichtigt, sondern auch die Fortbewegung anderer Verkehrsteilnehmer detektiert wird, kann beispielsweise sogar eine sich anbahnende Kollision erkannt werden, die nicht durch die Eigenbewegung des Fahrzeugs bewirkt wird (u.U. sogar bei Stillstand), sondern beispielsweise durch Annäherung eines anderen Fahrzeugs.

Neben der beschriebenen Warn- u. Hinweisfunktion kann das System auch so gestaltet werden, dass es bei schwierigen Manövern (enge Straßenführung, Brücken u.ä.) den Fahrer aktiv unterstützt. Eine solche Hilfestellung kann beispielsweise darin bestehen, dass während des Rangierens kollisionsgefährdete bewegliche Fahrzeugteile durch Eingriff des Systems automatisch aus dem Gefahrenbereich entfernt werden (weggeschwenkt, eingeklappt, versenkt, usw.). Damit ist der Fahrer von diesen verschiedenen Stellvorgängen weitgehend entlastet. Auch weitergehende Eingriffe sind zur Unterstützung bei räumlich beengten Manövern möglich. So kann das System bei entsprechender Ausgestaltung z.B. aktiv die Manövriereigenschaften des Fahrzeugs verändern (Niveau-Regelung, Verstellen der Deichsellänge usw.)

In einer bevorzugten Ausführungsform des erfindungsgemäßen Systems erfolgt in zeitkritischen Fahrsituationen ein direkter Eingriff des Systems in die Steuerung des Fahrzeugs (Lenkung, Bremse usw.). Dies bietet zusätzliche Sicherheit in Situationen, bei denen menschliche Reaktionszeiten nicht mehr ausreichen.

Das beschriebene System zur Vermeidung von Kollisionen bietet den Vorteil, dass es relativ leicht an Veränderungen z.B. der Fahrzeugkonturen (z.B. neuer Anhänger, andere Aufbauten usw.) angepaßt werden kann. Solche Änderungen lassen sich ohne großen technischen Aufwand in das System übernehmen, indem einfach die entsprechenden Daten der neuen Abmaße in den Speicher der (mobilen und/oder stationären) Datenverarbeitungsanlage eingegeben werden. Bei entsprechender Ausführung kann dies beispielsweise auch drahtlos erfolgen. Im Falle sich häufiger wiederholender (gleicher) Änderungen (z.B. Fahrt mit aufgeladenen, bzw. abgeladenen Container) können auch mehrere unterschiedliche Fahrzeugkonturen oder -abmaße im Speicher der Datenverarbeitungsanlage enthalten sein und abgerufen werden.

Das erfindungsgemäße System zeichnet sich durch einen großen Einsatzbereich aus, da es für sehr verschiedene Fahrzeugtypen zur Kollisionsvermeidung geeignet ist: z.B. PKW mit Wohnwagen, LKW-Gespannen, Baustellenfahrzeugen (Betonmischer, Autokran, Bagger-Transporter), sowie landwirtschaftlichen u.a. Nutzfahrzeugen.

## Patentansprüche

1. Verfahren zur Vermeidung von Kollisionen eines Fahrzeugs mit Hindernissen,
wobei Abstandswerte zwischen Fahrzeug und Hindernissen der Umgebung erfaßt werden und aus diesen Abstandswerten der vorhandene Fahrraum berechnet wird,
zusätzlich Werte der aktuellen Bewegung, insbesondere die Geschwindigkeit, die Fahrtrichtung oder die Verzögerung, des Fahrzeugs erfasst werden und aus diesen Werten in Verbindung mit Werten der Fahrzeugabmessungen der zur Fahrtfortführung benötigte Fahrraum berechnet wird,
anschließend ein Vergleich zwischen vorhandenem und benötigtem Fahrraum durchgeführt wird und bei Ausdehnung des benötigten Fahrraums über den vorhandenen Fahrraum hinaus Maßnahmen zur Kollisionsvermeidung eingeleitet werden
**dadurch gekennzeichnet,**
**dass** die Werte der Fahrzeugabmessungen aus einem Speicher ausgelesen werden, in welcher so ausgelegt ist, dass darin gleichzeitig mehrere unterschiedliche Fahrzeugkonturen abgelegt werden können.

2. Verfahren nach Anspruch 1, **dadurch gekennzeichnet, dass** die Werte der Fahrzeugabmessungen in den Speicher der Datenverarbeitungsanlage drahtlos übermittelt werden können.

3. Verfahren nach einem der Ansprüche 1 oder 2; **dadurch gekennzeichnet, dass** neben den Fahrzeugabmessungen auch die das Fahrverhalten, insbesondere den Wendekreis, das Ausscheren von überstehenden oder mitgeführten Teilen, mitbestimmenden konstruktiven Eigenschaften des Fahrzeugs, wie die Lage der Achsen oder die Auflage und Länge der Deichsel in die Berechnung des benötigten Fahrraums einbezogen werden.

4. Verfahren nach einem der Ansprüche 1 bis 3, **dadurch gekennzeichnet, dass** bei beweglichen Fahrzeugteilen; insbesondere einem Anhänger Angaben über die aktuelle Lage dieser Fahrzeugteile, insbesondere das Schrägstehen einer Deichsel, in die Berechnung des benötigten Fahrraums einbezogen werden.

5. Verfahren einem der Ansprüche 1 bis 4, **dadurch gekennzeichnet, dass** benötigter und vorhandener Fahrraum in zeitlichen Intervallen (t₀, t₁, t₂,...) bestimmt werden, wobei diese Intervalle so kurz aufeinander folgen, dass Änderungen des vorhandenen Fahrraums, insbesondere hervorgerufen durchs Bewegungen anderer Fahrzeuge, als auch des benötigten Fahrraums, insbesondere durch Bremsen oder Richtungsänderung des Fahrzeugs entsprechend schnell erfasst werden, so dass durch die bei Kollisionsgefahr eingeleiteten Maßnahmen eine Kollision vermieden wird.

6. Verfahren nach einem der vorangehenden Ansprüche, **dadurch gekennzeichnet, dass** ein räumlicher Sicherheitsabstand zwischen Fahrzeug und Hindernissen **dadurch** einbezogen ist, dass für die Durchführung des Vergleichs entsprechend verringerte Abmessungen des vorhandenen Fahrraums und/oder vergrößerte Abmessungen des benötigten Fahrraums verwendet werden.

7. Verfahren nach einem der vorangehenden Ansprüche, **dadurch gekennzeichnet, dass** zu den für eine Kollisionsvermeidung eingeleiteten Maßnahmen gehören können
- die Auslösung von Warnsignalen, insbesondere optischer, akustischer, visueller oder haptischer Natur,
- die Veränderung der Fahrzeugabmessungen, insbesondere durch Einklappen von Außenspiegeln, Einfahren von Windabweisern, oder Ausschwenken von Kranaufbauten
- die Veränderung der Manövrierfähigkeit des Fahrzeugs, insbesondere durch Niveauregelung oder Veränderung der Deichsellänge,
- oder der Eingriff in die Fahrzeugsteuerung, insbesondere mittels der Lenkung, den Bremsen oder der Schaltung.

8. Verfahren nach einem der vorangehenden Ansprüche, **dadurch gekennzeichnet, dass** die Maßnahmen zur Kollisionsvermeidung in einer durch die zeitliche Nähe einer Kollision bestimmte Rangfolge eingeleitet werden.

9. Vorrichtung zur Vermeidung von Kollisionen eines Fahrzeugs mit Hindernissen,
mit Mitteln zur Erfassung von Abstandswerten zwischen Fahrzeugteilen und Hindernissen in der Umgebung des Fahrzeugs, Mitteln zur Erfassung von Bewegungsparametern des Fahrzeugs, insbesondere der Geschwindigkeit, der Fahrtrichtung, oder der Verzögerung,
wobei über eine Datenverarbeitungsanlage aus den Abstandswerten der vorhandene Fahrraum errechnet wird, zusätzlich aus den Bewegungsparametern in Verbindung mit Werten der Fahrzeugabmessungen der zur Fahrtfortführung benötigte Fahrraum berechnet wird und ein Vergleich zwischen vorhandenem und benötigtem Fahrraum durchgeführt wird,
wobei Einrichtungen vorhanden sind, die im Fall einer errechneter Ausdehnung des benötigten Fahrraums über den vorhandenen Fahrraum hinaus von der Datenverarbeitungsanlage zur Vermeldung einer Kollision angesteuert werden,
**dadurch gekennzeichnet,**
**dass** zur Ablage der Werte der Fahrzeugabmessungen ein Speicher vorhanden ist, welcher so ausgelegt ist, dass darin gleichzeitig mehrere unterschiedliche Fahrzeugkonturen abgelegt werden können.

10. Vorrichtung nach Anspruch 9, **dadurch gekennzeichnet, dass** die Vorrichtung über eine Kommunikationseinheit verfügt, über welche die Werte der Fahrzeugabmessungen in den Speicher der Datenverarbeitungsanlage drahtlos übermittelt werden können.

11. Vorrichtung nach einem der Ansprüche 9 oder 10, **dadurch gekennzeichnet, dass** die Datenverarbeitungseinrichtung in die Berechnung des benötigten Fahrraums auch Angaben zu den konstruktiven Eigenschaften des Fahrzeugs, insbesondere die Lage der Achsen oder die Auflage und Länge der Deichsel, einbezieht, die das Fahrverhalten des Fahrzeugs, insbesondere den Wendekreis oder das Ausscheren von überstehenden oder mitgeführten Teilen mitbestimmen.

12. Vorrichtung nach einem der Ansprüche 9 bis 11, **dadurch gekennzeichnet, dass** Mittel vorhanden sind, die bei beweglichen Fahrzeugteilen, insbesondere einem Anhänger, die aktuelle Lage dieser Fahrzeugteile, insbesondere das Schrägstehen einer Deichselerfassen und über die Datenverarbeitungsanlage diese Werte in die Berechnung des benötigten Fahrraums einbezogen werden.

13. Vorrichtung nach einem der Ansprüche 9 bis 12, **dadurch gekennzeichnet, dass** die Datenverarbeitungsanlage den benötigten und vorhandenen Fahrraum in zeitlichen Intervallen (t₀, t₁, t₂, ...) bestimmt,
wobei diese Intervalle so kurz aufeinander folgen, dass Änderungen des vorhandenen Fahrraums, insbesondere hervorgerufen durch Bewegungen anderer Fahrzeuge, als auch des benötigten Fahrraums, insbesondere infolge von Bremsen oder Richtungsänderung des Fahrzeugs entsprechend schnell erfasst werden, so dass die Einrichtungen zur Vermeidung einer Kollision von der Datenverarbeitungsanlage so frühzeitig angesteuert werden, dass eine Kollision verhindert wird.

14. Vorrichtung nach einem der vorangehenden Ansprüche 9 bis 13, **dadurch gekennzeichnet, dass** ein räumlicher Sicherheitsabstand zwischen Fahrzeug und Hindernissen **dadurch** einbezogen ist, dass die Datenverarbeitungsanlage vor der Durchführung des Vergleichs die Abmessungen des vorhandenen Fahrraums rechnerisch verringert und/oder die Abmessungen des benötigten Fahrraums vergrößert.

15. Vorrichtung nach einem der vorangehenden Ansprüche 9 bis 14, **dadurch gekennzeichnet, dass** zu den Einrichtungen zur Vermeidung einer Kollision gehören können
- Mittel zur Auslösung von Warnsignalen, insbesondere optischer, akustischer, visueller oder haptischer Natur,
- Mittel zur Veränderung der Fahrzeugabmessungen, insbesondere durch Einklappen von Außenspiegeln, Einfahren von Windabweisern oder Ausschwenken von Kranaufbauten
- Mittel zur Veränderung der Manövrierfähigkeit des Fahrzeugs, insbesondere durch Niveauregelung oder Veränderung der Deichsellänge
- Mittel zum Eingriff in die Fahrzeugsteuerung, insbesondere mittels der Lenkung, den Bremsen oder der Schaltung.

16. Vorrichtung nach einem der vorangehenden Ansprüche 9 bis. 15, **dadurch gekennzeichnet, dass** die Einrichtungen zur Vermeidung einer Kollision von der Datenverarbeitungsanlage in einer durch die zeitliche Nähe einer Kollision bestimmte Rangfolge angesteuert werden.

17. Vorrichtung nach einem der vorangehenden Ansprüche 9 bis 16, **dadurch gekennzeichnet, dass** die Mittel zur Erfassung von Abstandswerten zwischen Fahrzeugteilen und Hindernissen ausgebildet sind als optische, insbesondre infrarote oder akustische insbesondere Ultraschallbasierte Abstandsmessfühler, bzw. als Strahlensensoren, wie Radar oder Laser, bzw. als Videokameras, oder als elektronische Einrichtungen zur Positions-/Umgebungsbestimmung, insbesondre GPS.

18. Vorrichtung nach einem der vorangehenden Ansprüche, **dadurch gekennzeichnet, dass** die Datenverarbeitungsanlage als mobile Anlage im Fahrzeug mitgeführt wird.

19. Vorrichtung nach einem der vorangehenden Ansprüche, **dadurch gekennzeichnet, dass** das Fahrzeug über eine drahtlose Verbindung mit einer stationären Datenverarbeitungsanlage in Verbindung steht.

## Claims

1. Method for avoiding collisions between a vehicle and obstacles, distance values between the vehicle and obstacles in the surroundings being sensed and the available driving space being calculated from these distance values, values relating to the current movement, in particular the velocity, the direction of travel or the deceleration, of the vehicle being additionally sensed and the driving space which is required to continue the journey being calculated from these values in conjunction with values of the dimensions of the vehicle, a comparison then being made between the available driving space and the required driving space and measures to avoid collisions being initiated if the required driving space extends beyond the available driving space, **characterized in that** the values of the dimensions of the vehicle are read out from a memory which is configured in such a way that a plurality of different vehicle contours can be stored in it simultaneously.

2. Method according to Claim 1, **characterized in that** the values of the dimensions of the vehicle can be transmitted in a wire-free fashion into the memory of the data processing system.

3. Method according to one of Claims 1 or 2,
**characterized in that**, in addition to the dimensions of the vehicle, also the structural properties of the vehicle, such as the position of the axles or the support and length of the shafts, which also determine the driving behaviour, in particular the turning circle, the moving out of protruding or carried parts, are included in the calculation of the required driving space.

4. Method according to one of Claims 1 to 3, **characterized in that** in the case of movable vehicle parts, in particular a trailer, information about the current position of these vehicle parts, in particular the oblique position of a shaft, is included in the calculation of the required driving space.

5. Method according to one of Claims 1 to 4, **characterized in that** required driving space and available driving space are determined at time intervals (t₀, t₁, t₂, ...), with these intervals following one another in such short succession that changes to the available driving space, caused in particular by movements of other vehicles, and to the required driving space, in particular owing to braking or a change in direction of the vehicle, are sensed appropriately quickly so that a collision is avoided by the measures which are initiated when there is a risk of collision.

6. Method according to one of the preceding claims, **characterized in that** a spatial safety distance between the vehicle and obstacles is included by virtue of the fact that correspondingly reduced dimensions of the available driving space and/or enlarged dimensions of the required driving space are used to carry out the comparison.

7. Method according to one of the preceding claims, **characterized in that** the measures which are initiated in order to avoid a collision may include
- warning signals, in particular of an optical, audible, visual or haptic nature, are triggered,
- dimensions of the vehicle are changed, in particular as a result of exterior rear view mirrors being folded in, draught deflectors being retracted or crane superstructures pivoting out,
- the manoeuvrability of the vehicle changes, in particular as a result of a change in level or a change in the length of the shaft,
- or intervention is made in the vehicle control system, in particular by means of the steering system, the brakes or the gear shifting system.

8. Method according to one of the preceding claims, **characterized in that** the measures for avoiding a collision are initiated in a sequence which is determined by the imminence of a collision.

9. Device for avoiding collisions between a vehicle and obstacles,
having means for sensing distance values between vehicle parts and obstacles in the surroundings of the vehicle, means for sensing movement parameters of the vehicle, in particular the velocity, the direction of travel or the deceleration, the available driving space being calculated from the distance values by means of a data processing system, the driving space required to continue the journey being additionally calculated from the movement parameters in conjunction with values of the dimensions of the vehicle, and a comparison being made between the available driving space and the required driving space, devices being provided which are actuated by the data processing system in order to avoid a collision if a calculated extent of the required driving space exceeds the available driving space, **characterized in that** in order to store the values of the dimensions of the vehicle a memory is provided which is configured in such a way that a plurality of different vehicle contours can be stored in it simultaneously.

10. Device according to Claim 9, **characterized in that** the device has a communications unit which can be used to transfer the values of the dimensions of the vehicle into the memory of the data processing system in a wire-free fashion.

11. Device according to one of Claims 9 or 10, **characterized in that** the data processing device also includes, in the calculation of the required driving space, information on the structural properties of the vehicle, in particular the position of the axles or the support and length of the shafts, which information also determines the driving behaviour of the vehicle, in particular the turning circle or the moving out of protruding or carried parts.

12. Device according to one of Claims 9 to 11, **characterized in that** means are provided which, in the case of movable vehicle parts, in particular a trailer, sense the current position of these vehicle parts, in particular the oblique position of a shaft, and include these values in the calculation of the required driving space by means of the data processing system.

13. Device according to one of Claims 9 to 12,
**characterized in that** the data processing system determines the required driving space and the available driving space at time intervals (t₀, t₁, t₂, ...), with these intervals following one another in such short succession that changes to the available driving space, caused in particular by movements of other vehicles, and to the required driving space, in particular owing to braking or a change in direction of the vehicle, are sensed appropriately quickly so that the devices for avoiding a collision are actuated by the data processing device so early that a collision is prevented.

14. Device according to one of the preceding Claims 9 to 13, **characterized in that** a spatial safety distance between the vehicle and obstacles is included by virtue of the fact that before the data processing system carries out the comparison it computationally reduces the dimensions of the available driving space and/or computationally increases the dimensions of the required driving space.

15. Device according to one of the preceding Claims 9 to 14, **characterized in that** the devices for avoiding a collision may include
- means for triggering warning signals, in particular of an optical, audible, visual or haptic nature,
- means for changing the dimensions of the vehicle, in particular by folding in exterior rear view mirrors, retracting draught deflectors or swivelling out crane superstructures,
- means for changing the manoeuvrability of the vehicle, in particular by changing the level or changing the length of a shaft,
- means for intervening in the control of the vehicle, in particular by means of the steering system, the brakes or the gear shifting system.

16. Device according to one of Claims 9 to 15, **characterized in that** the devices for avoiding a collision are actuated by the data processing system in a sequence which is determined by the imminence of a collision.

17. Device according to one of the preceding Claims 9 to 16, **characterized in that** the means for sensing distance values between the vehicle parts and obstacles are embodied as optical, in particular, infrared or acoustic, in particular ultrasound-based distance measuring sensors, or as ray sensors, such as radar or laser, or as video cameras or as electronic devices for determining position/surroundings, in particular GPS.

18. Device according to one of the preceding claims, **characterized in that** the data processing system is carried as a mobile system in the vehicle.

19. Device according to one of the preceding claims, **characterized in that** the vehicle is connected to a stationary data processing system via a wire-free link.

## Revendications

1. Procédé pour éviter les collisions d'un véhicule avec des obstacles, dans lequel on enregistre des valeurs de distances entre véhicule et obstacles de l'environnement et on calcule l'espace de circulation disponible à partir de ces valeurs de distances, de plus on enregistre des valeurs de déplacement en cours, notamment la vitesse, la direction de circulation ou le ralentissement du véhicule et à partir de ces valeurs, en liaison avec des valeurs de dimensions du véhicule, on calcule l'espace de circulation nécessaire pour poursuivre le parcours, on effectue ensuite une comparaison entre l'espace de circulation disponible et nécessaire et on prend des mesures pour éviter la collision en étendant l'espace de circulation nécessaire au-delà de l'espace de circulation disponible, **caractérisé en ce que** les valeurs de dimensions du véhicule sont lues à partir d'une mémoire qui est réalisée de telle sorte qu'on peut y enregistrer simultanément plusieurs contours différents de véhicules.

2. Procédé selon la revendication 1, **caractérisé en ce que** les valeurs de dimensions du véhicule peuvent être transmises sans fils dans la mémoire de l'installation de traitement des données.

3. Procédé selon une des revendications 1 ou 2,
**caractérisé en ce qu'**en plus des valeurs de dimensions du véhicule, on fait aussi entrer dans le calcul de l'espace de circulation nécessaire, les caractéristiques de construction du véhicule comme la position des axes ou le support et la longueur du bras d'attelage qui déterminent le comportement de conduite, notamment le rayon de braquage, le déport d'éléments dépassant ou transportées.

4. Procédé selon une des revendications 1 à 3, **caractérisé en ce que** dans le cas d'éléments mobiles du véhicule, notamment une remorque, on fait entrer des indications sur la position courante de ces éléments du véhicule, notamment la position oblique d'un bras d'attelage, dans le calcul de l'espace de circulation nécessaire.

5. Procédé selon une des revendications 1 à 4, **caractérisé en ce qu'**on définit les espaces de circulation nécessaire et disponible à des intervalles de temps (t₀, t₁, t₂, ...), ces intervalles se suivant si rapidement que des modifications de l'espace de circulation disponible, notamment entraîné par les déplacements d'autres véhicules, mais aussi de l'espace de circulation nécessaire, notamment par freinage ou changement de direction du véhicule, sont par conséquent enregistrées rapidement de telle sorte que les mesures entreprises en cas de danger de collision permettent d'éviter une collision.

6. Procédé selon une des revendications précédentes, **caractérisé en ce qu'**on fait entrer un espace de distance de sécurité entre véhicule et obstacles en utilisant pour la comparaison, des dimensions réduites en rapport de l'espace de circulation disponible et/ou des dimensions accrues en rapport de l'espace de circulation nécessaire.

7. Procédé selon une des revendications précédentes, **caractérisé en ce que** les mesures engagées pour éviter une collision peuvent aussi comporter
- le déclenchement de signaux d'alerte, notamment de nature optique, acoustique, visuelle ou haptique,
- la modification des dimensions du véhicule, notamment en rabattant les rétroviseurs extérieurs, en escamotant les déflecteurs ou en pivotant les structures de grues,
- la modification de la capacité de manoeuvre du véhicule, notamment par la régulation du niveau ou par modification de la longueur du bras d'attelage,
- ou l'intervention dans le pilotage du véhicule, notamment au moyen de la direction, des freins ou de la boîte de vitesses.

8. Procédé selon une des revendications précédentes, **caractérisé en ce que** les mesures pour éviter une collision sont entreprises dans une hiérarchie définie par la proximité temporelle d'une collision.

9. Dispositif pour éviter les collisions d'un véhicule avec des obstacles, avec des moyens pour enregistrer des valeurs de distances entre éléments de véhicule et obstacles dans l'environnement du véhicule, des moyens pour enregistrer des paramètres de déplacement du véhicule, notamment de la vitesse, de la direction de circulation ou du ralentissement, dans lequel, avec une installation de traitement de données, on calcule l'espace de circulation disponible à partir des valeurs de distances, on calcule de plus l'espace de circulation nécessaire pour poursuivre le parcours à partir des paramètres de déplacement en liaison avec des valeurs de dimensions du véhicule et on effectue une comparaison entre l'espace de circulation disponible et nécessaire, dans lequel on dispose d'équipements qui sont pilotés par l'installation de traitement de données pour éviter une collision dans le cas d'une extension calculée de l'espace de circulation nécessaire au-delà de l'espace de circulation disponible, **caractérisé en ce qu'**on dispose d'une mémoire pour déposer les valeurs de dimensions du véhicule, qui est réalisée de telle sorte qu'on peut y enregistrer simultanément plusieurs contours différents de véhicules.

10. Dispositif selon la revendication 9, **caractérisé en ce que** le dispositif dispose d'une unité de communication permettant de transmettre sans fils les valeurs de dimensions du véhicule dans la mémoire de l'installation de traitement des données.

11. Dispositif selon une des revendications 9 ou 10, **caractérisé en ce que** l'installation de traitement des données fait aussi entrer dans le calcul de l'espace de circulation nécessaire, des indications sur les caractéristiques de construction du véhicule, notamment la position des axes ou le support et la longueur du bras d'attelage, qui déterminent le comportement de conduite du véhicule, notamment le rayon de braquage ou le déport d'éléments dépassant ou transportées.

12. Dispositif selon une des revendications 9 à 11, **caractérisé en ce qu'**on dispose de moyens permettant à travers l'installation de traitement des données de faire entrer dans le calcul de l'espace de circulation nécessaire, dans le cas d'éléments mobiles du véhicule notamment une remorque, la position courante de ces éléments du véhicule, notamment la position oblique d'un bras d'attelage.

13. Dispositif selon une des revendications 9 à 12, **caractérisé en ce que** l'installation de traitement des données définit les espaces de circulation nécessaire et disponible à des intervalles de temps (t₀, t₁, t₂, ...), ces intervalles se suivant si rapidement que des modifications de l'espace de circulation disponible, notamment entraînées par des déplacements d'autres véhicules, mais aussi de l'espace de circulation nécessaire, notamment par suite de freinage ou changement de direction du véhicule, sont par conséquent enregistrées rapidement de telle sorte que les installations pour éviter une collision sont activées de manière tellement précoce qu'elles permettent d'éviter une collision.

14. Dispositif selon une des revendications précédentes 9 à 13, **caractérisé en ce qu'**on fait entrer un espace de distance de sécurité entre le véhicule et les obstacles par le fait que l'installation de traitement des données, avant d'effectuer la comparaison, réduit par calcul les dimensions de l'espace de circulation disponible et/ou augmente les dimensions de l'espace de circulation nécessaire.

15. Dispositif selon une des revendications précédentes 9 à 14, **caractérisé en ce que** les équipements pour éviter une collision peuvent aussi comporter
- des moyens pour déclencher des signaux d'alerte, notamment de nature optique, acoustique, visuelle ou haptique,
- des moyens pour modifier les dimensions du véhicule, notamment en rabattant les rétroviseurs extérieurs, en escamotant les déflecteurs ou en pivotant les structures de grues,
- des moyens pour modifier la capacité de manoeuvre du véhicule, notamment par la régulation du niveau ou par modification de la longueur du bras d'attelage,
- des moyens pour intervenir dans le pilotage du véhicule, notamment au moyen de la direction, des freins ou de la boîte de vitesses.

16. Dispositif selon une des revendications précédentes 9 à 15, **caractérisé en ce que** les équipements pour éviter une collision sont commandés par l'installation de traitement des données dans une hiérarchie définie par la proximité temporelle d'une collision.

17. Dispositif selon une des revendications précédentes 9 à 16, **caractérisé en ce que** les moyens pour enregistrer les valeurs de distance entre éléments de véhicule et obstacles sont réalisés sous forme de palpeurs de mesure de distance, optiques notamment infrarouges, ou acoustiques notamment basés sur les ultrasons, respectivement sous forme de capteurs de rayonnements comme le radar ou le laser, respectivement sous forme de caméra vidéo, ou sous forme d'équipements électroniques pour déterminer les positions et/ou l'environnement, notamment GPS.

18. Dispositif selon une des revendications précédentes, **caractérisé en ce que** l'installation de traitement des données est embarquée dans le véhicule sous la forme d'une installation mobile.

19. Dispositif selon une des revendications précédentes, **caractérisé en ce que** le véhicule est en liaison avec une installation statique de traitement des données au moyen d'une liaison sans fils.
